# FASCICULE DE BREVET EUROPEEN

(11) **EP 3 188 857 B1**
(45) Date de publication et mention de la délivrance du brevet: **13.03.2019**
(21) Numéro de dépôt: 15767213.0
(22) Date de dépôt: 01.09.2015
(51) Int. Cl.: B22C 9/10

(54) **PROCEDE DE PRODUCTION D'UN NOYAU CERAMIQUE**
VERFAHREN ZUR HERSTELLUNG EINES KERAMISCHEN KERNS
METHOD FOR PRODUCING A CERAMIC CORE

(30) Priorité: 04.09.2014 FR 1458298
(43) Date de publication de la demande: 12.07.2017
(73) Titulaire: SAFRAN AIRCRAFT ENGINES, 75015 Paris (FR)
(72) Inventeur: TRUELLE, Franck, Edmond, Maurice, F-77550 Moissy-cramayel Cedex (FR); BALDASSARI, Claude, F-77550 Moissy-cramayel Cedex (FR); LOCATELLI, David, F-64110 GELOS (FR); QUACH, Daniel, F-77550 Moissy-cramayel Cedex (FR); VERGER, Jean-Louis, Martial, F-77550 Moissy-cramayel Cedex (FR)
(74) Mandataire: Calvo de Nó, Rodrigo
(86) Numéro de dépôt international: PCT/FR2015/052305
(87) Numéro de publication internationale: WO 2016/034802

(56) Documents cités:
- EP-A2- 1 942 251

## Description

La présente invention concerne le domaine de la fonderie et plus particulièrement la production de noyaux céramiques pour fonderie, destinés à être reçus dans des moules de fonderie pour former des cavités internes dans les pièces coulées dans ces moules.

Ces noyaux peuvent notamment être utilisés dans des procédés de fonderie à cire perdue ou modèle perdu, comme dans la publication de demande de brevet européen EP 1 942 251 A2. Ces procédés de fonderie dits à cire perdue ou à modèle perdu sont connus depuis l'antiquité. Ils sont particulièrement adaptés pour la production de pièces métalliques avec des formes complexes. Ainsi, la fonderie à modèle perdu est notamment utilisée pour la production d'aubes de turbomachines. On entend par « turbomachine », dans le présent contexte, toute machine dans laquelle peut s'opérer un transfert d'énergie entre un écoulement de fluide et au moins un rotor, comme, par exemple, un compresseur, une pompe, une turbine, une hélice, ou une combinaison de plusieurs de ces éléments. Par « aube », on entend tout élément profilé, qu'il soit fixe ou rotatif, contribuant à ce transfert d'énergie dans la turbomachine. La fonderie à modèle perdu est particulièrement utile pour la production

Dans la fonderie à modèle perdu, la première étape est normalement la réalisation d'un modèle en matériau fusible, à la température de fusion comparativement peu élevée, comme par exemple une cire ou résine. Ce modèle est ensuite intégré dans un arbre de coulée qui sera enrobé de matériau réfractaire pour former un moule. Après évacuation ou élimination du matériau fusible du modèle de l'intérieur du moule, ce qui donne son nom à ces procédés dits à modèle perdu, un métal en fusion est coulé dans ce moule, afin de remplir la cavité de moulage formée par le modèle dans le moule après son évacuation ou élimination. Une fois que le métal se refroidit et solidifie, le moule peut être ouvert ou détruit afin de récupérer une pièce métallique conforme à la forme du modèle. On entend par « métal », dans le présent contexte, tant des métaux purs que, surtout, des alliages métalliques.

Afin de former des cavités internes complexes au sein des pièces métalliques résultant de ces procédés de fonderie, il est possible d'intégrer un ou plusieurs noyaux réfractaires dans chaque modèle. Ces noyaux réfractaires vont rester en position à l'intérieur de chaque moule après évacuation du matériau fusible, pour ainsi former des contours complexes à l'intérieur de la pièce coulée dans ce moule. Ils pourront ensuite être éliminés avec le reste du moule lors du démoulage de cette pièce.

Typiquement, ces noyaux réfractaires sont produits en matériau céramique et constituent des éléments consommables dans le procédé de fonderie. Pour leur production, des procédés de moulage par injection ont été développés, dans lesquels une pâte comprenant un granulat céramique et un liant polymère est injectée à pression dans une cavité de moule pour former le noyau, celui-ci étant ensuite cuit afin de le consolider. Pour augmenter encore plus la résistance du noyau aux efforts auxquels il sera soumis lors du procédé de fonderie, ce noyau peut encore être imprégné avec une résine après sa première cuisson, pour être ensuite cuit une deuxième fois.

Toutefois, le taux de rebut dans la production de ces noyaux peut être relativement élevé, et ceci d'autant plus qu'ils auront des formes complexes. Ceci est dû aux tensions internes générées lors de la cuisson et le refroidissement subséquent du noyau, tensions internes qui peuvent créer des criques dans certains points critiques du noyau. En particulier, le noyau peut présenter des protubérances latérales, notamment quand il est destiné à former un circuit de refroidissement dans une aube de turbomachine, les protubérances latérales pouvant alors être destinées à former des canaux de sortie vers une surface extérieure de l'aube, et notamment de fentes de sortie de bord de fuite dans l'aube. Dans ce cas, des criques peuvent se former au pied d'au moins une de ces protubérances latérales.

### Objet et résumé de l'invention

L'invention vise à remédier à ces inconvénients. En particulier, la présente divulgation vise à proposer un procédé de production d'un noyau céramique pour fonderie qui permette d'éviter la formation de criques au pied d'au moins une première protubérance latérale du noyau.

Dans au moins un mode de réalisation de l'invention, ce but est atteint grâce au fait que le procédé comprend au moins une étape d'injection d'une pâte comprenant un granulat céramique et un liant polymère dans une cavité de moule pour former une pièce présentant une forme correspondant à la forme du noyau avec l'addition d'au moins une protubérance latérale supplémentaire adjacente à ladite première protubérance latérale, une étape de cuisson de la pièce, et une étape d'élimination de ladite protubérance latérale supplémentaire de la pièce, notamment par usinage, après ladite étape de cuisson.

Grâce à ces dispositions, les tensions internes tendant à générer des criques lors de la cuisson peuvent se concentrer sur la protubérance latérale supplémentaire de la pièce, protubérance latérale supplémentaire qui peut jouer ainsi un rôle sacrificiel, puisqu'elle est ensuite éliminée et ne se retrouve plus sur le noyau céramique fini. La première protubérance latérale du noyau, ainsi que d'éventuelles autres protubérances latérales adjacentes, peuvent ainsi être épargnées de la formation de telles criques, réduisant ainsi le taux de rebut.

Afin de mieux consolider la pièce, le procédé peut comprendre aussi une étape d'imprégnation de la pièce avec une résine après ladite étape de cuisson. Cette étape d'imprégnation peut avoir lieu avant ou après l'élimination de la protubérance latérale supplémentaire.

Afin de mieux concentrer les tensions internes de la pièce sur la protubérance latérale supplémentaire, une section transversale de la protubérance latérale supplémentaire peut présenter une surface correspondant à entre 75 % et 125 % d'une surface d'une section transversale de la première protubérance latérale dans un même plan de coupe. En particulier, une épaisseur de la protubérance latérale supplémentaire parallèlement à un axe transversal de la pièce peut correspondre à entre 90% et 110% d'une épaisseur de la première protubérance latérale parallèlement au même axe transversal et/ou une largeur de la protubérance latérale supplémentaire parallèlement à un axe longitudinal de la pièce correspondre à entre 90% et 110% d'une largeur de la première protubérance latérale parallèlement au même axe longitudinal.

La forme du noyau peut présenter non seulement une première protubérance latérale, mais une pluralité de protubérances latérales espacées entre elles parallèlement à un axe longitudinal de la pièce, notamment avec des sections transversales décroissantes à partir de la première protubérance latérale. La protubérance latérale supplémentaire de la pièce peut être espacée par rapport à ladite première protubérance latérale dans la même direction et en sens opposé aux autres protubérances latérales de ladite pluralité. Dans ce cas, et afin de mieux concentrer les tensions internes sur la protubérance latérale supplémentaire, une distance minimale entre la protubérance latérale supplémentaire de la pièce et la première protubérance latérale peut être entre 0,7 et 2,5 fois, et en particulier ente 1 et 1,5 fois, une distance minimale entre la première protubérance latérale et la protubérance latérale la plus proche parmi ladite pluralité.

Le noyau peut notamment être destiné à être reçu dans un moule de fonderie pour la production d'une aube de turbomachine, afin de former un circuit de refroidissement dans l'aube, ladite première protubérance latérale formant une fente de sortie de bord de fuite.

### Brève description des dessins

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une vue d'un noyau céramique produit par le procédé suivant l'invention,
- la figure 2A est une vue latérale d'une pièce destinée à former ce noyau, avant l'élimination d'une protubérance latérale supplémentaire, et
- la figure 2B est une vue de la même pièce, en coupe suivant le plan IIB-IIB.

### Description détaillée de l'invention

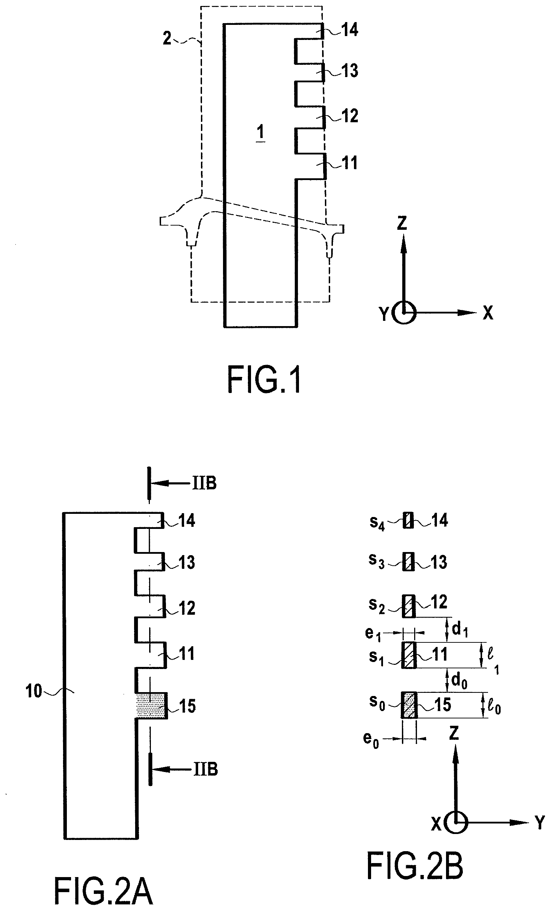

Un noyau céramique 1 réalisé suivant un procédé représentant un mode spécifique de réalisation de l'invention est illustré sur la figure 1. Ce noyau céramique 1 est destiné à la production, par fonderie par modèle perdu, d'une aube 2 de turbomachine, illustrée en pointillé. Comme l'on peut apprécier sur cette figure, ce noyau 1 présente quatre protubérances latérales 11,12,13,14, orientées parallèlement à un axe transversal X du noyau 1, et décalées l'une par rapport à l'autre parallèlement à un axe longitudinal Z du noyau 1. Ces quatre protubérances latérales 11,12,13,14, en forme de dents, sont destinées à former dans l'aube 2 des fentes de sortie de bord de fuite d'un circuit de refroidissement de l'aube 2.

Dans une première étape de production du noyau 1, une pâte comprenant un granulat céramique, formé par exemple par des grains de silice de taille micrométrique, et un liant polymère, permettant de donner à cette pâte une viscosité souhaitée, est injectée à haute pression, par exemple entre 5 et 70 MPa, dans une cavité de moule présentant une forme correspondant à la forme du noyau 1, avec l'addition d'une protubérance latérale supplémentaire. On obtient ainsi une pièce intermédiaire qui est consolidée par frittage du granulat céramique pendant une étape de cuisson. Cette étape de cuisson peut par exemple avoir une durée totale de 30 à 45 heures, avec deux paliers à 80°C et 1200°C de manière à assurer non seulement le frittage du granulat céramique, mais aussi l'élimination du liant polymère.

La pièce intermédiaire 10 ainsi consolidée est illustrée sur les figures 2A et 2B. Comme on peut voir sur la figure 2A, cette pièce intermédiaire 10, destinée à former à former le noyau 1, comprend au moins une protubérance latérale supplémentaire 15 adaptée à être éliminée après cuisson de la pièce intermédiaire 10 et avant mise en oeuvre du noyau 1. Ainsi, dans le mode de réalisation illustré, elle présente, à part les quatre protubérances latérales 11, 12, 13 et 14 du noyau 1, une protubérance latérale supplémentaire 15, adjacente à la première protubérance latérale 11, laquelle, dans le mode de réalisation illustrée, est celle parmi les quatre protubérances latérales 11, 12, 13, et 14 qui est la plus proche du pied de l'aube 2. Plus spécifiquement, la protubérance latérale supplémentaire 15 est espacée, par rapport à la première protubérance latérale 11, en sens opposé aux autres protubérances latérales 12, 13 et 14. Sur la pièce 10, la distance minimale d₀ entre la protubérance latérale supplémentaire 15 et la première protubérance latérale 11 en direction parallèle à l'axe longitudinal Z est égale à entre 0,7 et 2,5 fois la distance minimale d₁ entre la première protubérance latérale 11 et la protubérance latérale 12 suivante. En particulier, la distance d₀ peut être entre 1 et 1,5 fois la distance d₁.

Sur la figure 2B on peut apprécier les sections transversales des protubérances latérales 15, 11, 12, 13 et 14 dans le plan de coupe IIB-IIB de la figure 2A. Comme illustré schématiquement sur cette figure, la surface s₀ de la section transversale de la protubérance latérale supplémentaire 15 est similaire à la surface s₁ de la section transversale de la première protubérance latérale 11. En particulier, la surface s₀ peut correspondre à entre 75 % et 125 % de la surface s₁. En fait, les deux surfaces s₀, s₁ peuvent être sensiblement égales. Les surfaces s₂, s₃, s₄ des sections transversales des autres protubérances latérales 12,13,14 peuvent être décroissantes à partir de la surface s₁ de la section transversale de la première protubérance latérale 11, de telle manière que s₁>s₂>s₃>s₄, ou au moins être toutes inférieures aux surfaces s₀ et s₁.

Dans le mode de réalisation illustré, chacune des protubérances latérales 15, 11, 12, 13 et 14 présente une section sensiblement rectangulaire. La largeur l₀ et l'épaisseur e₀ de la protubérance latérale supplémentaire 15 en directions parallèles, respectivement, à l'axe longitudinal Z et à un deuxième axe transversal Y perpendiculaire au premier axe transversal X, peuvent chacune présenter une valeur égale à entre 90 % et 110 % les dimensions l₁ et e₁ correspondantes de la première protubérance latérale 11.

Suite à la cuisson et au frittage de la pièce 10, elle va rétrécir, générant des tensions internes dans la pièce 10. Ces tensions internes peuvent produire des criques au pied de la protubérance latérale supplémentaire 15, qui va donc jouer un rôle sacrificiel pour éviter leur formation sur la première protubérance latérale 11 et les protubérances latérales subséquentes 12, 13 et 14. Toutefois, dans une étape subséquente, le protubérance latérale supplémentaire 15 est éliminée, par exemple par usinage, de manière à donner à la pièce 10 la forme définitive du noyau 1. Les criques sont ainsi éliminées avec la protubérance latérale supplémentaire 15.

Dans une autre étape, qui peut être mise en oeuvre avant ou, de préférence, après l'élimination de la protubérance latérale supplémentaire 15, il est possible d'imprégner la pièce 10 avec une résine thermodurcissable afin de lui conférer des propriétés mécaniques encore meilleures.

Après ces étapes, on obtient ainsi, à partir de la pâte de granulat céramique et liant polymérique, et en passant par la pièce 10 avec une protubérance latérale supplémentaire, le noyau céramique 1 sous sa forme finale.

Ce noyau 1 résultant peut ensuite être incorporé dans un moule de fonderie afin de former des contours internes complexes dans une pièce coulée dans ce moule.

Ainsi, dans un procédé de fonderie à modèle perdu, le noyau 1 ainsi obtenu pourrait être incorporé dans un modèle de la pièce métallique à réaliser, ce modèle étant formé à partir d'un matériau fusible à la température de fusion comparativement peu élevée. Un tel matériau peut être, par exemple, une cire ou résine. Ce modèle pourrait ensuite être intégré dans un arbre de coulée destiné à être enrobé de matériau réfractaire pour former un moule de fonderie. Après évacuation ou élimination du matériau fusible du modèle de l'intérieur du moule de fonderie, un métal en fusion serait coulé dans ce moule, afin de remplir la cavité de moulage formée par le modèle dans le moule de fonderie après son évacuation ou élimination. Une fois que le métal se refroidit et solidifie, le moule serait ouvert ou détruit afin de récupérer une pièce métallique conforme à la forme du modèle.

Quoique la présente invention ait été décrite en se référant à un exemple de réalisation spécifique, il est évident que des différentes modifications et changements peuvent être effectués sur cet exemple sans sortir de la portée générale de l'invention telle que définie par les revendications. Par conséquent, la description et les dessins doivent être considérés dans un sens illustratif plutôt que restrictif.

## Revendications

1. Procédé de production d'un noyau (1) céramique pour fonderie, ledit noyau (1) présentant une forme avec au moins une première protubérance latérale (11), le procédé comprenant au moins :
une étape d'injection d'une pâte comprenant un granulat céramique et un liant polymère dans une cavité de moule pour former une pièce (10) présentant une forme correspondant à la forme du noyau (1) avec l'addition d'au moins une protubérance latérale supplémentaire (15) adjacente à ladite première protubérance latérale (11) ;
une étape de cuisson de la pièce (10) ; et
une étape d'élimination de ladite protubérance latérale supplémentaire (15) de la pièce (10) après ladite étape de cuisson.

2. Procédé suivant la revendication 1, dans lequel le procédé comprend aussi une étape d'imprégnation de la pièce (10) avec une résine après ladite étape de cuisson.

3. Procédé suivant l'une quelconque des revendications précédentes, dans lequel l'élimination de la protubérance latérale supplémentaire (15) s'effectue par usinage.

4. Procédé suivant l'une quelconque des revendications précédentes, dans lequel une section transversale de la protubérance latérale supplémentaire (15) présente une surface (s₀) correspondant à entre 75 % et 125 % d'une surface (s₁) d'une section transversale de la première protubérance latérale (11) dans un même plan de coupe.

5. Procédé suivant l'une quelconque des revendications précédentes, dans lequel une épaisseur (e₀) de la protubérance latérale supplémentaire (15) parallèlement à un axe transversal (Y) de la pièce (10) correspond à entre 90% et 110% d'une épaisseur (e₁) de la première protubérance latérale (11) parallèlement au même axe transversal (Y).

6. Procédé suivant l'une quelconque des revendications précédentes, dans lequel une largeur (l₀) de la protubérance latérale supplémentaire parallèlement à un axe longitudinal (Z) de la pièce correspond à entre 90% et 110% d'une largeur de la première protubérance latérale parallèlement au même axe longitudinal.

7. Procédé suivant l'une quelconque des revendications précédentes, dans lequel la forme du noyau (1) présente une pluralité de protubérances latérales (11,12,13,14) espacées entre elles parallèlement à un axe longitudinal (Z) de la pièce (10).

8. Procédé suivant la revendication 7, dans lequel lesdites protubérances latérales (11,12,13,14) du noyau (1) présentent des sections transversales décroissantes à partir de la première protubérance latérale (11).

9. Procédé suivant l'une quelconque des revendications 7 ou 8, dans lequel la protubérance latérale supplémentaire (15) de la pièce (10) est espacée par rapport à ladite première protubérance latérale (11) dans la même direction et en sens opposé aux autres protubérances latérales (12,13,14) du noyau (1).

10. Procédé suivant la revendication 9, dans lequel une distance minimale (d₀) entre la protubérance latérale supplémentaire (15) de la pièce (10) et la première protubérance latérale (11) est entre 0,7 et 2,5 fois une distance minimale (d₁) entre la première protubérance latérale (11) et l'autre protubérance latérale (12) la plus proche parmi ladite pluralité.

11. Procédé suivant l'une quelconque des revendications précédentes, dans lequel ledit noyau (1) est destiné à être reçu dans un moule de fonderie pour la production d'une aube (2) de turbomachine, afin de former un circuit de refroidissement dans l'aube (2), ladite première protubérance latérale (11) formant une fente de sortie de bord de fuite dans l'aube (2).

## Patentansprüche

1. Verfahren zur Herstellung eines Gießerei-Keramikkerns (1), wobei der Kern (1) eine Form mit wenigstens einem ersten seitlichen Vorsprung (11) aufweist, wobei das Verfahren wenigstens umfasst:
einen Schritt des Einspritzens einer Paste, die ein Keramikgranulat und ein polymeres Bindemittel umfasst, in einen Formhohlraum, um ein Teil (10) zu bilden, das eine Form aufweist, welche der Form des Kerns (1) unter Hinzufügen wenigstens eines an den ersten seitlichen Vorsprung (11) angrenzenden zusätzlichen seitlichen Vorsprungs (15) entspricht,
einen Schritt des Brennens des Teils (10) und
einen Schritt des Entfernens des zusätzlichen seitlichen Vorsprungs (15) von dem Teil (10) nach dem Brennschritt.

2. Verfahren nach Anspruch 1, wobei das Verfahren auch einen Schritt des Imprägnierens des Teils (10) mit einem Harz nach dem Brennschritt umfasst.

3. Verfahren nach einem der vorhergehenden Ansprüche, bei dem das Entfernen des zusätzlichen seitlichen Vorsprungs (15) durch Trennen erfolgt.

4. Verfahren nach einem der vorhergehenden Ansprüche, bei dem ein Querschnitt des zusätzlichen seitlichen Vorsprungs (15) eine Fläche (s₀) aufweist, die zwischen 75 % und 125 % einer Fläche (s₁) eines Querschnitts des ersten seitlichen Vorsprungs (11) in einer gleichen Schnittebene entspricht.

5. Verfahren nach einem der vorhergehenden Ansprüche, bei dem eine Dicke (e₀) des zusätzlichen seitlichen Vorsprungs (15) parallel zu einer Querachse (Y) des Teils (10) zwischen 90 % und 110 % einer Dicke (e₁) des ersten seitlichen Vorsprungs (11) parallel zu der gleichen Querachse (Y) entspricht.

6. Verfahren nach einem der vorhergehenden Ansprüche, bei dem eine Breite (l₀) des zusätzlichen seitlichen Vorsprungs parallel zu einer Längsachse (Z) des Teils zwischen 90 % und 110 % einer Breite des ersten seitlichen Vorsprungs parallel zu der gleichen Längsachse entspricht.

7. Verfahren nach einem der vorhergehenden Ansprüche, bei dem die Form des Kerns (1) eine Vielzahl von seitlichen Vorsprüngen (11, 12, 13, 14) aufweist, die parallel zu einer Längsachse (Z) des Teils (10) voneinander beabstandet sind.

8. Verfahren nach Anspruch 7, bei dem die seitlichen Vorsprünge (11, 12, 13, 14) des Kerns (1) von dem ersten seitlichen Vorsprung (11) aus abnehmende Querschnitte aufweisen.

9. Verfahren nach einem der Ansprüche 7 oder 8, bei dem der zusätzliche seitliche Vorsprung (15) des Teils (10) von dem ersten seitlichen Vorsprung (11) in der gleichen Richtung und in zu den anderen seitlichen Vorsprüngen (12, 13, 14) des Kerns (1) entgegengesetzter Richtung beabstandet ist.

10. Verfahren nach Anspruch 9, bei dem ein Mindestabstand (d₀) zwischen dem zusätzlichen seitlichen Vorsprung (15) des Teils (10) und dem ersten seitlichen Vorsprung (11) zwischen dem 0,7- und 2,5-fachen eines Mindestabstandes (d₁) zwischen dem ersten seitlichen Vorsprung (11) und dem aus der Vielzahl am nächsten gelegenen weiteren seitlichen Vorsprung (12) beträgt.

11. Verfahren nach einem der vorhergehenden Ansprüche, bei dem der Kern (1) dazu bestimmt ist, in einer Gussform für die Herstellung einer Turbomaschinenschaufel (2) aufgenommen zu werden, um einen Kühlkreis in der Schaufel (2) zu bilden, wobei der erste seitliche Vorsprung (11) einen Hinterkantenaustrittsschlitz in der Schaufel (2) bildet.

## Claims

1. A method of producing a ceramic core (1) for casting, said core (1) presenting a shape that includes at least a first lateral protuberance (11), and the method comprising at least:
• a step of injecting a paste comprising a ceramic granulate and a polymer binder into a mold cavity in order to form a part (10) presenting a shape corresponding to the shape of the core (1) together with at least one additional lateral protuberance (15) adjacent to said first lateral protuberance (11);
• a step of firing the part (10); and
• a step of eliminating said additional lateral protuberance (15) from the part (10) after said firing step.

2. A method according to claim 1, wherein the method also includes a step of impregnating the part (10) with a resin after said firing step.

3. A method according to claim 1, wherein the additional lateral protuberance (15) is eliminated by machining.

4. A method according to claim 1, wherein the additional lateral protuberance (15) has a cross-section presenting an area (s₀) corresponding to 75% to 125% of the area (s₁) of a cross-section of the first lateral protuberance (11) in the same section plane.

5. A method according to claim 1, wherein the additional lateral protuberance (15) has a thickness (e₀) parallel to a transverse axis (Y) of the part (10) corresponding to 90% to 110% of the thickness (e₁) of the first lateral protuberance (11) parallel to the same transverse axis (Y) .

6. A method according to claim 1, wherein the additional lateral protuberance has a width (ℓ₀) parallel to a longitudinal axis (Z) of the part corresponding to 90% to 110% of the width of the first lateral protuberance parallel to the same longitudinal axis.

7. A method according to claim 1, wherein the shape of the core (1) presents a plurality of lateral protuberances (11, 12, 13, 14) spaced apart from one another parallel to a longitudinal axis (Z) of the part (10) .

8. A method according to claim 7, wherein said lateral protuberances (11, 12, 13, 14) of the core (1) present cross-sections that decrease going away from the first lateral protuberance (11).

9. A method according to claim 7, wherein the additional lateral protuberance (15) of the part (10) is spaced apart from said first lateral protuberance (11) along the same axis and in the opposite direction to the other lateral protuberances (12, 13, 14) of the core (1).

10. A method according to claim 9, wherein a minimum distance (d₀) between the additional lateral protuberance (15) of the part (10) and the first lateral protuberance (11) is 0.7 times to 2.5 times a minimum distance (d₁) between the first lateral protuberance (11) and the closest of the lateral protuberances (12) of said plurality of lateral protuberances.

11. A method according to claim 1, wherein said core (1) is for being received in a casting mold for producing a turbomachine blade (2) in order to form a cooling circuit in the blade (2), said first lateral protuberance (11) forming an outlet slot in the trailing edge of the blade (2) .
